# FASCICULE DE BREVET EUROPEEN

(11) **EP 0 713 162 B1**
(45) Date de publication et mention de la délivrance du brevet: **21.07.1999**
(21) Numéro de dépôt: 95117979.5
(22) Date de dépôt: 15.11.1995
(51) Int. Cl.: G04G 1/00, G01C 17/30

(54) **Montre comprenant un dispositif de détection de la direction du nord magnétique terrestre**
Uhr mit Vorrichtung zur Bestimmung der erdmagnetischen Nordrichtung
Watch with device for determining the direction of earth magnetic north

(30) Priorité: 21.11.1994 CH 349594
(43) Date de publication de la demande: 22.05.1996
(73) Titulaire: ASULAB S.A., CH-2501 Bienne (CH)
(72) Inventeur: Born, Jean-Jacques, CH-1110 Morges (CH); Bornand, Etienne, CH-2017 Boudry (CH); Dinger, Rudolf, CH-2024 St-Aubin (CH)
(74) Mandataire: Thérond, Gérard Raymond

(56) Documents cités:
- WO-A-85/01805
- BE-A- 469 489
- CH-A- 678 359
- FR-A- 2 404 250
- FR-A- 2 438 861
- GB-A- 2 151 790

## Description

La présente invention concerne une montre comprenant un dispositif de détection de la direction du nord magnétique terrestre. Le résultat de cette détection est utilisé pour indiquer soit une direction géographique donnée, soit la direction d'un lieu prédéfini, notamment la Mecque.

Il est connu du document EP 0 448 018 une montre boussole comprenant un mouvement horloger électronique, deux capteurs magnétiques servant à capter directement le flux magnétique terrestre, une unité de traitement des signaux fournis par les deux capteurs magnétiques pour déterminer l'azimut magnétique d'un axe de référence de la montre, des moyens électroniques de gestion et de commande servant à commander des moyens d'affichage d'une direction géographique et notamment de la direction du nord géographique. Pour ce faire, il est prévu que la déclinaison magnétique du lieu où se trouve l'utilisateur de la montre puisse être fournie aux moyens électroniques de gestion et de commande de telle manière que ces moyens électroniques puissent déterminer l'azimut géographique correspondant à l'azimut magnétique mesuré.

La fonction première d'un dispositif ayant une fonction de boussole est d'indiquer le plus correctement possible la direction du nord géographique, ou d'un azimut géographique quelconque. Pour ce faire, il est avant tout nécessaire, outre le fait de connaître la déclinaison magnétique du lieu d'utilisation, que les moyens de détection de la direction du nord magnétique soient fiables et précis.

Le document EP 0 448 018 propose de déterminer la direction du nord magnétique en utilisant deux capteurs magnétiques formés chacun par une résistance magnétique. Ces capteurs sont sensibles au flux du champ magnétique terrestre selon une direction préférentielle. Ainsi, chacun des deux capteurs mesure sensiblement la composante du flux magnétique terrestre, dans la région où ce capteur est localisé, selon ladite direction préférentielle. Les deux capteurs sont agencés de telle manière que leurs directions préférentielles respectives sont orthogonales. L'information reçue par les deux capteurs permet de déterminer une direction, cette direction étant interprétée par les moyens électroniques de gestion et de commande comme étant la direction du nord magnétique.

La détermination de la direction du nord magnétique proposée dans le document susmentionné est délicate et peu fiable. Premièrement, la direction du nord magnétique mesurée à l'aide des deux capteurs magnétiques est dépendante de l'orientation du plan défini par les deux directions préférentielles des deux capteurs. Si l'utilisateur de la montre ne maintient pas le plan général de celle-ci horizontal, la mesure de la direction du nord magnétique est faussée.

Deuxièmement, le champ magnétique terrestre est perturbé par l'environnement des capteurs magnétiques et en particulier par les masses magnétiques du mouvement horloger électronique logé dans la montre. Ces masses magnétiques déforment localement les lignes du flux magnétique terrestre de telle sorte que les composantes respectives du flux magnétique terrestre capté par les deux capteurs magnétiques ne permettent pas de déterminer exactement la direction du nord magnétique terrestre.

Finalement, on notera que le document susmentionné ne donne aucune information sur le positionnement des deux capteurs magnétiques au sein de la montre boussole ou du dispositif utilisé comme boussole.

Le but de la présente invention est de palier les inconvénients susmentionnés en fournissant une montre comprenant un dispositif d'indication d'une direction géographique donnée présentant une grande précision dans la détermination de la direction du nord magnétique.

A cet effet, la présente invention concerne une montre comprenant :
- un mouvement d'horlogerie,
- un boîtier dans lequel est logé ce mouvement d'horlogerie,
- des moyens de détection sensibles au champ magnétique terrestre et fournissant un premier signal de détection et un deuxième signal de détection,
- des moyens d'indication d'une direction géographique,
- des moyens électroniques pour commander lesdits moyens d'indication en fonction desdits premier et deuxième signaux de détection.

Cette montre est caractérisée en ce que les moyens de détection comportent un aimant bipolaire permanent solidaire en rotation d'un arbre agencé dans le boîtier de manière à tourner librement autour d'un axe de rotation prédéterminé, cet aimant ayant un axe magnétique sensiblement perpendiculaire à cet axe de rotation. Ces moyens de détection comportent en outre au moins un premier capteur et un deuxième capteur agencés dans le boîtier et sensibles au champ magnétique de l'aimant permanent, ces premier et deuxième capteurs fournissant respectivement lesdits premier et deuxième signaux de détection, lesdits signaux étant traités par lesdits moyens électroniques de manière à déterminer la position angulaire de l'axe magnétique de l'aimant permanent.

Grâce à ces caractéristiques, la mesure de la direction du nord magnétique terrestre est considérablement améliorée. L'aimant permanent se positionne naturellement dans une position d'énergie minimale et l'axe magnétique de cet aimant indique alors, dans un plan perpendiculaire à l'axe de rotation, une direction moyenne du flux magnétique terrestre s'écoulant dans la région où est logé l'aimant.

Etant donné que le champ magnétique produit par l'aimant permanent dans la région avoisinant cet aimant est quasi non-perturbé, il est aisé de déterminer avec une grande exactitude la direction de l'axe magnétique de l'aimant à l'aide des deux capteurs agencés à proximité de cet aimant. De plus, contrairement à l'art antérieur mentionné ci-avant, les deux capteurs sont agencés pour capter le flux magnétique produit par l'aimant permanent, la densité de ce flux magnétique étant largement supérieure à la densité du flux magnétique terrestre dans la région avoisinant l'aimant permanent. Ensuite, la position relative entre cet aimant permanent et les deux capteurs est fixe. Ainsi, les conditions de la mesure sont constantes dans le temps et dans l'espace.

Selon une caractéristique particulière de l'invention, l'aimant permanent est situé dans le boîtier de la montre dans une région périphérique latérale extérieure au mouvement horloger agencé dans cette montre. De ce fait, la perturbation engendrée par la présence du mouvement horloger est minimisée et localisée.

Lorsque le mouvement horloger comprend des masses magnétiques, comme c'est le cas pour un mouvement horloger électronique, l'aimant permanent est agencé dans le boîtier à une distance suffisante de ces masses magnétiques pour que sa position d'énergie minimale soit essentiellement déterminée par le flux magnétique terrestre.

Selon d'autres caractéristiques de l'invention, la montre comprend en outre une unité de stockage d'informations dans laquelle est mémorisée une table de correspondance définissant pour une première pluralité de positions angulaires de l'axe magnétique de l'aimant permanent une seconde pluralité de positions angulaires respectives, chaque position angulaire de la seconde pluralité déterminant la direction du nord magnétique lorsque l'axe magnétique de l'aimant permanent est orienté selon la position angulaire respective de la première pluralité. Le décalage angulaire entre la position dudit axe magnétique et la direction correspondante du nord magnétique a une valeur dont la grandeur est fonction de la perturbation engendrée par les masses magnétiques comprises dans la montre sur le flux magnétique terrestre dans la région où est situé l'aimant permanent et sur l'aimant permanent lui-même.

Selon ces dernières caractéristiques de l'invention, la détermination de la direction du nord magnétique est affranchie de la présence d'éléments compris dans la montre qui perturbent le flux magnétique terrestre. Grâce à la table de correspondance prévue, la direction du nord magnétique indiquée par l'aimant permanent lui-même peut être corrigée de manière fiable. En effet, il est sans autre possible de déterminer le décalage angulaire entre une position quelconque de l'axe magnétique de l'aimant permanent et la direction du nord magnétique correspondante à l'aide d'une boussole étalon par exemple. Une fois les valeurs déterminées pour une pluralité de positions angulaires différentes de l'aimant permanent, la perturbation engendrée par l'environnement de l'aimant permanent est connue et bien définie. Cette perturbation pour une direction donnée de l'axe magnétique de l'aimant permanent reste sensiblement invariante dans le temps et dans l'espace.

Il résulte des diverses caractéristiques de l'invention mentionnées ci-avant une montre comprenant un dispositif d'indication de la direction du nord magnétique précis et fiable. De plus, il n'est pas nécessaire, bien qu'avantageux, que le plan général de la montre soit horizontal alors que l'axe de rotation de l'aimant permanent est perpendiculaire à ce plan général de la montre dans un mode de réalisation préféré.

D'autres buts, caractéristiques et avantages de l'invention seront également décrits ci-après à l'aide de la description suivante, faite en référence aux dessins annexés, donnés à titre d'exemples nullement limitatifs, dans lesquels :
- la figure 1 représente schématiquement une vue de dessus d'un premier mode de réalisation d'une montre selon l'invention, cette vue comprenant une zone arrachée;
- la figure 2 est une vue en coupe selon la ligne II-II de la figure 1;
- la figure 3 est une vue agrandie d'une partie de la montre selon le plan de coupe de la figure 2;
- la figure 4 montre schématiquement l'amplitude du signal électrique fourni par une sonde de Hall située à proximité d'un aimant permanent selon le montage représenté à la figure 3;
- la figure 5 est un schéma général de l'agencement du premier mode de réalisation de l'invention;
- la figure 6 est un organigramme montrant schématiquement le fonctionnement du premier mode de réalisation de l'invention;
- la figure 7 est une vue de dessus d'un deuxième mode de réalisation d'une montre selon l'invention, cette vue comprenant une zone arrachée;
- la figure 8 est un schéma général de l'agencement du deuxième mode de réalisation de l'invention;
- la figure 9 est un organigramme montrant schématiquement le fonctionnement du deuxième mode de réalisation de l'invention.

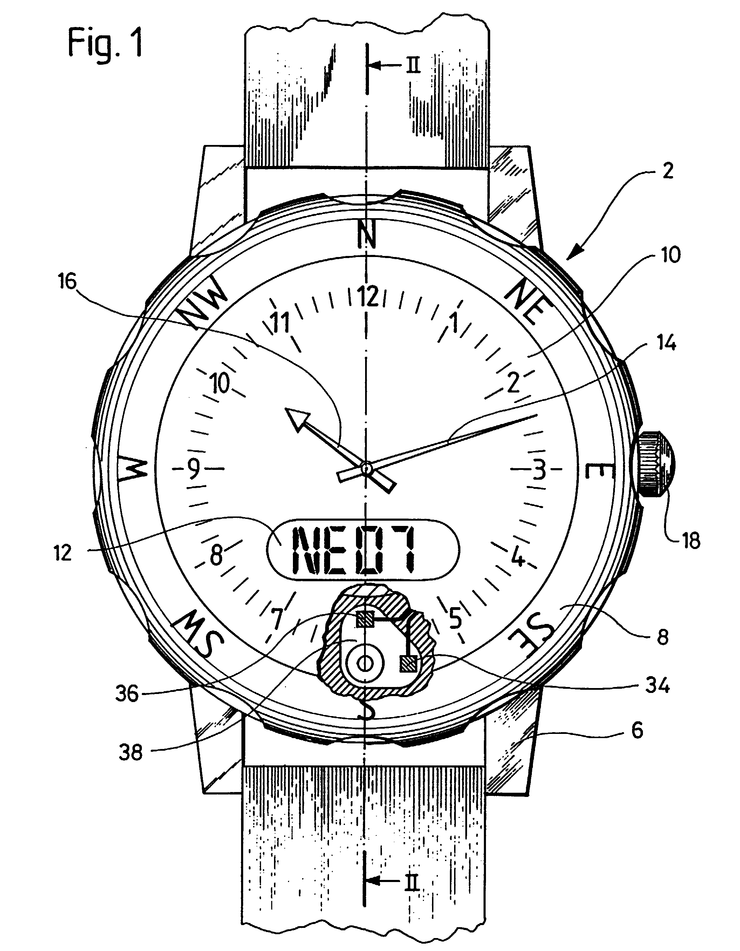

A l'aide des figures 1 à 6, on décrira ci-après un premier mode de réalisation d'une montre comprenant un dispositif d'indication d'une direction géographique selon l'invention.

La montre comprend un boîtier 2 comprenant un fond 4, une carrure 6 et une lunette tournante 8. La montre comprend en outre un cadran 10 sur lequel sont affichées des indications relatives à l'heure. Une zone du cadran 10 est réservée à un affichage 12 à cristaux liquides (LCD). Cette montre comprend en outre une première aiguille 14 et une seconde aiguille 16, ainsi qu'une couronne 18. A l'intérieur du boîtier est logé un mouvement horloger 20 positionné dans un cercle d'encageage 22. Dans une région latérale 24 du mouvement horloger 20 est agencée une cage 26 dans laquelle est logé un aimant permanent 28 solidaire en rotation d'un arbre 30 pouvant tourner librement autour d'un axe de rotation 32 prédéterminé. On notera que l'aimant permanent 28 est situé à l'extérieur du mouvement horloger 20 et que l'axe de rotation 32 est perpendiculaire au plan général du cadran 10.

Il est également prévu deux capteurs magnétiques 34 et 36, formés par exemple par deux sondes de Hall, disposés sur un même substrat 38. La cage 26 présente une première partie cylindrique 40 dans la région où est logé l'aimant permanent 28 et une deuxième partie cylindrique 42, d'un diamètre moindre, située au-dessus de l'aimant permanent 28. Les deux parties cylindriques 40 et 42 sont reliées par une partie annulaire 44 définissant une portée externe sur laquelle est disposé en porte-à-faux le substrat 38.

Le substrat 38 est ainsi situé dans un plan perpendiculaire à l'axe de rotation 32 et on remarquera que les capteurs 34 et 36 sont situés à une même distance de l'axe de rotation 32 et présentent un décalage angulaire de 90° relativement à cet axe de rotation. Le substrat 38 comporte une ouverture du diamètre de la partie cylindrique 42 de la cage 26, cette dernière traversant ladite ouverture du substrat 38 de manière à positionner correctement les capteurs 34 et 36 relativement à l'aimant permanent 28. Pour maintenir le substrat 38 en appui contre la partie annulaire 44, il est possible de fixer ce substrat 38 soit à la cage 26, soit aux cercles d'encageage 22 ou alors par un moyen quelconque de pression selon la direction définie par l'axe de rotation 32.

L'aimant permanent 28 est un aimant bipolaire ayant une aimantation radiale. Ainsi, l'axe magnétique 46 de cet aimant permanent est sensiblement perpendiculaire à l'axe de rotation 32.

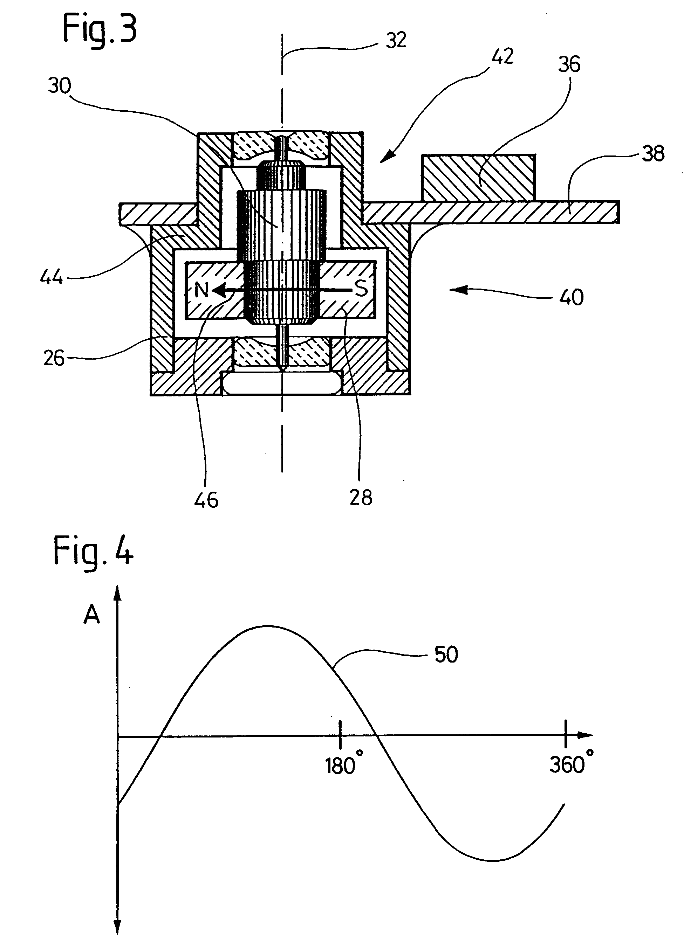

Sur la figure 4 est représenté graphiquement l'amplitude A du flux magnétique détecté par le capteur 36 lorsque l'aimant 28 subit une rotation de 360°. On remarquera que la forme de la courbe 50 obtenue est sinusoïdale. De ce fait, il est sans autre possible à l'aide des deux capteurs 34 et 36 décalés angulairement d'un angle d'environ 90° de déterminer de façon précise et univoque la direction angulaire de l'axe magnétique 46 de l'aimant 28. La courbe 50 représentée à la figure 4 correspond à une courbe expérimentale mesurée sur un dispositif tel que représenté à la figure 3.

Les masses magnétiques comprises dans la montre, en particulier dans le mouvement électronique, forment des sources de perturbation du champ magnétique terrestre et sont également susceptibles de capter des lignes du champ magnétique de l'aimant permanent et d'influencer ainsi le positionnement angulaire de cet aimant permanent 28. Afin de palier ces inconvénients et de réduire au maximum l'influence des masses magnétiques susmentionnées, il est prévu d'agencer l'aimant permanent 28 dans une région périphérique extérieure au mouvement horloger de manière à ce que cet aimant soit éloigné au maximum des masses magnétiques de ce mouvement horloger et particulièrement de celles susceptibles d'engendrer une forte perturbation, comme par exemple la pile servant à l'alimentation du mouvement horloger.

A l'aide de recherches expérimentales relativement simples, il est possible de définir au moins un emplacement favorable dans la région périphérique susmentionnée où la position de l'aimant permanent 28 est essentiellement déterminée par le flux magnétique terrestre se propageant dans la région de cet aimant.

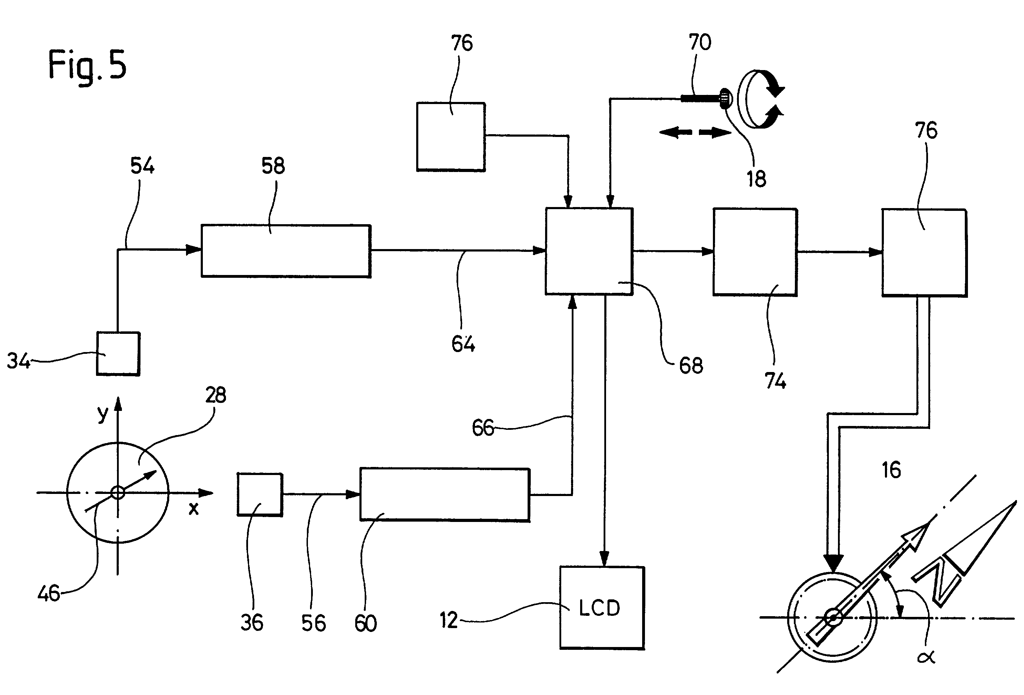

Sur la figure 5 est représenté l'aimant bipolaire 28 avec son axe magnétique 46, les deux capteurs magnétiques 34 et 36 qui fournissent respectivement, lorsqu'un mode boussole est activé, un premier signal de détection 54 et un deuxième signal de détection 56. Les signaux de détection 54 et 56 sont fournis respectivement à deux unités de traitement 58 et 60, agencées pour fournir deux signaux utiles de détection 64 et 66 à une unité électronique de gestion et de commande 68. L'unité électronique 68 est agencée pour calculer à l'aide des deux signaux utiles 64 et 66 la direction de l'axe magnétique 46 de l'aimant 28.

Selon une variante de réalisation, les deux unités de traitement 58 et 60 ne forment qu'une seule et même unité de traitement, laquelle est agencée pour déterminer l'orientation angulaire de l'axe magnétique 46 de l'aimant 28 et pour fournir à l'unité électronique 68 un signal d'entrée représentatif de l'orientation angulaire de l'axe magnétique 46.

Il est également prévu que la couronne 18 est reliée à une tige rotative 70, cette tige rotative étant agencée dans la montre de manière à pouvoir fournir divers signaux électriques d'entrée à l'unité électronique 68. De telles tiges rotatives sont connues de l'homme du métier et sont décrites par exemple dans les documents CH 632 894, EP 0 569 868 et CH 608 164. Dans le mode de réalisation décrit ici, il est prévu que la tige et les moyens de contact électrique associés à cette tige permettent de fournir diverses informations suivant que la tige est pressée ou tirée relativement à une position intermédiaire neutre et également par une rotation de cette tige dans un sens ou dans l'autre.

L'unité électronique 68 est agencée pour commander un affichage LCD 12 et une alimentation 74 reliée électriquement à un moteur bidirectionnel 76, lequel est couplé mécaniquement à l'aiguille 16. Cette aiguille 16 est utilisée pour l'indication de l'heure ou l'indication d'une direction géographique présélectionnée. On notera ici que l'aiguille des minutes 14 peut être choisie de manière équivalente. De même, toute autre aiguille équipant une montre selon l'invention peut être utilisée pour l'indication d'une direction géographique présélectionnée lorsque cette montre est activée dans un mode boussole.

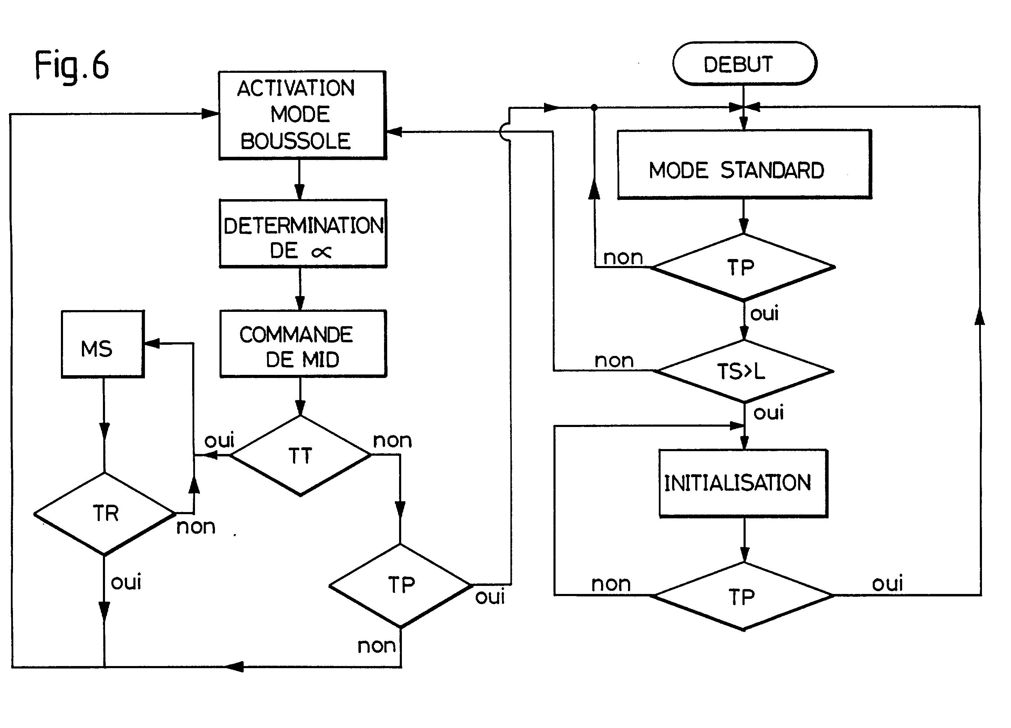

Sur la figure 5, l'aiguille 16 indique la direction du nord géographique. A l'aide de la tige rotative 70, de la couronne 18 actionnable par un utilisateur de la montre et l'affichage à cristaux liquides 12, il est prévu qu'un utilisateur puisse sélectionner un azimut géographique quelconque entre 0° et 360° et puisse également introduire une déclinaison magnétique correspondant à la déclinaison magnétique du lieu où se trouve cet utilisateur. Ceci sera décrit plus en détail ci-après à l'aide de la figure 6.

On mentionnera ici que tout moyen d'affichage d'une direction peut être utilisé pour l'indication d'une direction géographique présélectionnée selon l'invention. De même, tout moyen connu de l'homme du métier permettant la sélection par un utilisateur d'un angle peut être utilisé dans d'autres variantes de réalisation pour la sélection de l'azimut géographique et de la déclinaison magnétique susmentionnée.

Selon l'invention, il est prévu une unité de stockage d'informations 76 dans laquelle est mémorisée une table de correspondance définissant pour une première pluralité de positions angulaires de l'axe magnétique 46 de l'aimant 28 une seconde pluralité de positions angulaires respectives. Chaque position angulaire de la seconde pluralité détermine la direction du nord magnétique lorsque l'axe magnétique 46 de l'aimant 28 est orienté selon la position angulaire respective de la première pluralité.

Le décalage angulaire entre la position de l'axe magnétique 46 et la direction correspondante du nord magnétique terrestre a une valeur dont la grandeur dépend de la perturbation engendrée par les masses magnétiques contenues dans la montre, à la fois sur le flux magnétique terrestre dans la région où est agencé l'aimant 28 et sur cet aimant 28 lui-même. Comme cela a été mentionné précédemment, l'aimant 28 est agencé dans la montre de manière à ce que l'influence directe des masses magnétiques sur cet aimant soit relativement faible, de telle manière que l'aimant 28 est orienté essentiellement par le flux du champ magnétique terrestre. Cependant, une perturbation résiduelle directe est quasi inévitable et de plus, les masses magnétiques modifient la distribution des lignes de champ du flux magnétique terrestre.

Il est nécessaire, pour obtenir une indication précise et fiable de la direction du nord magnétique ou de n'importe quel azimut magnétique, de déterminer la table de correspondance susmentionnée pour une pluralité de positions angulaires différentes de l'axe magnétique 46. Par exemple, cette table comprend 120 valeurs correspondant à 120 décalages consécutifs de 3° de l'axe magnétique 46. Ainsi, pour toute valeur mesurée de la position angulaire de l'axe magnétique 46, l'unité électronique 68 peut déterminer dans la première pluralité de positions angulaires mémorisées dans l'unité 76 une valeur égale ou proche de la valeur mesurée et obtenir ainsi l'information sur la direction angulaire réelle du nord magnétique terrestre.

A l'aide de la figure 6, on décrira ci-après brièvement le principe de fonctionnement du premier mode de réalisation de l'invention. On notera que le principe de fonctionnement décrit ci-après n'est pas exhaustif et que plusieurs variantes sont envisageables.

La montre est agencée pour fonctionner dans un mode standard. Dans ce mode standard, les aiguilles 14 et 16 indiquent l'heure locale de l'utilisateur. L'affichage à cristaux liquides 12 peut également, dans ce mode standard, indiquer une heure ou toute autre information utile, notamment la date.

Lorsque l'alimentation de la montre a été interrompue, notamment par un changement de la pile servant à cette alimentation, il est prévu de pouvoir initialiser la position de l'aiguille 16 servant notamment à l'indication d'une direction présélectionnée. Pour entrer dans le mode d'initialisation, il est nécessaire d'exercer une pression sur la tige 70 par le moyen de la couronne 18 pendant un laps de temps TS plus grand qu'une valeur limite L donnée. Sur la figure 6, la référence TP a été utilisée pour désigner l'action de presser axialement la tige 70, la référence TT pour désigner l'action de tirer axialement la tige 70, la référence TR pour désigner l'action de repousser la tige 70 dans une position intermédiaire neutre.

Dans le mode d'initialisation, l'utilisateur amène au moyen de la couronne 18 l'aiguille 16 par exemple sur la position 12 heures. Par une nouvelle pression sur la tige 70, la position angulaire de l'aiguille 16 est fournie à l'unité électronique 68 qui est agencée pour connaître la position angulaire dans le temps de l'aiguille 16.

Pour activer la montre dans un mode boussole, il est prévu de presser sur la tige 70 pendant un laps de temps TS inférieur à la valeur limite L. Lorsque le mode boussole est activé, les capteurs magnétiques 34 et 36 sont alimentés et l'unité électronique 68 calcule à l'aide des signaux utiles de détection 64 et 66 la position angulaire de l'axe magnétique 46 de l'aimant 28. Ensuite, à l'aide de la table de correspondance mémorisée dans l'unité 76, l'unité électronique 68 calcule la position angulaire correspondant de la direction du nord magnétique terrestre. Ensuite, cette unité électronique 68 détermine la position angulaire α relativement au centre de rotation de l'aiguille 16 correspondant à l'azimut géographique introduit par l'utilisateur de la montre en prenant en considération la déclinaison magnétique introduite également par cet utilisateur.

Une fois la position angulaire α déterminée, l'unité électronique 68 commande l'alimentation 74 du moteur pas à pas 76 pour aligner l'aiguille 16 sur la direction angulaire α, cette aiguille 16 indiquant alors la direction géographique présélectionnée par l'utilisateur de la montre selon l'invention. Pour revenir au mode de fonctionnement standard, il est nécessaire de presser à nouveau sur la tige 70.

Pour modifier la sélection de la direction géographique présélectionnée et de la déclinaison magnétique du lieu d'utilisation de la montre, il est prévu d'entrer dans un mode de sélection MS en tirant la tige 70. Dans le mode de sélection, la sélection d'une direction géographique sera effectuée par une rotation dans un premier sens de la tige 70 qui engendre un défilement de directions sélectionnables sur l'affichage à cristaux liquides 12. De même, pour sélectionner une déclinaison magnétique, l'utilisateur actionne la tige 70 dans un second sens de rotation engendrant un défilement de déclinaisons magnétiques sélectionnables sur l'affichage 12. Pour sortir du mode de sélection et revenir au mode de fonctionnement boussole, l'utilisateur repousse la tige 70 dans sa position intermédiaire neutre.

Dans une première variante de réalisation, il est possible de prévoir que l'utilisateur sélectionne directement et uniquement un azimut magnétique. Dans une deuxième variante de réalisation, outre la sélection de la direction géographique désirée, la détermination de la déclinaison magnétique est réalisée au moyen d'un défilement de villes, de régions ou pays sur l'affichage 12 lorsque la couronne est entraînée en rotation dans son second sens de rotation et que la montre est activée dans le mode de sélection. Après que l'utilisateur ait sélectionné sur l'affichage 12 le lieu où il se trouve, l'unité électronique 68 détermine la déclinaison magnétique correspondante audit lieu à l'aide d'une deuxième table de correspondance dans laquelle est donnée pour chaque ville, région ou pays sélectionnable la déclinaison magnétique correspondante. Dans cette dernière variante, il est prévu une deuxième unité de stockage d'informations (non représentée) dans laquelle est mémorisée ladite deuxième table de correspondance.

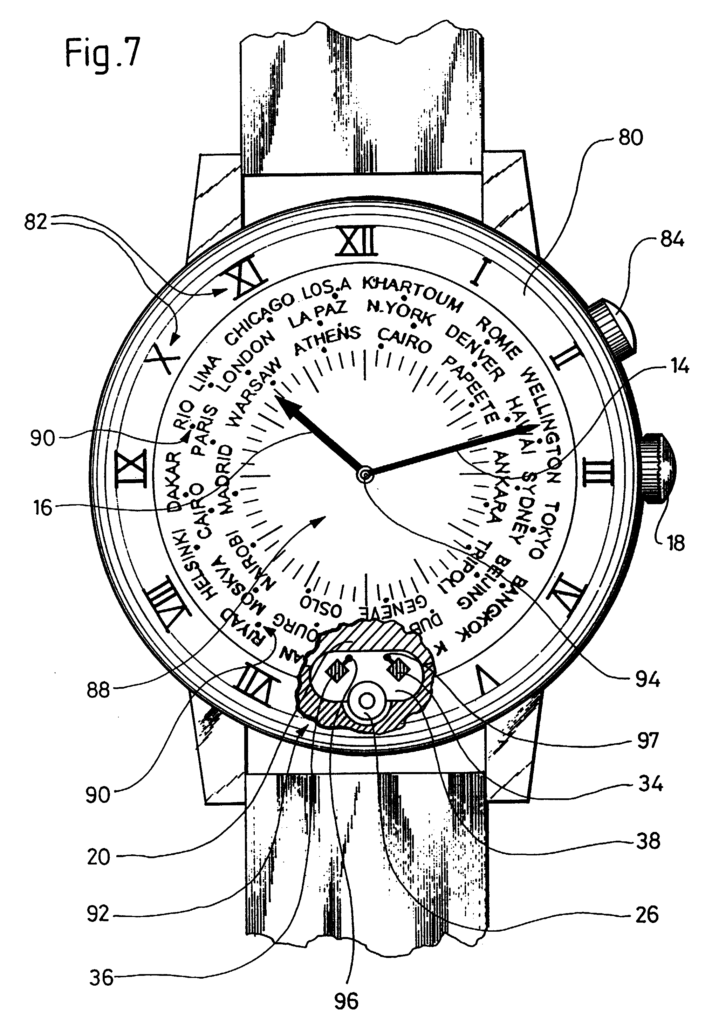

A l'aide des figures 7 à 9, on décrira ci-après un deuxième mode de réalisation de l'invention, ainsi que son principe de fonctionnement.

Sur la figure 7, la montre comprend une lunette fixe 80 comportant des repères horaires 82. Cette montre comprend également une couronne 18 reliée mécaniquement à une tige rotative 70 actionnable axialement, cette tige 70 étant similaire à la tige décrite dans le premier mode de réalisation. En outre, la montre comporte un poussoir 84 et un cadran 88 comportant plusieurs repères 90 correspondant à une pluralité de villes importantes, inscrites chacune à proximité du repère respectif. La montre comporte en outre une aiguille des minutes 14 et une aiguille des heures 16.

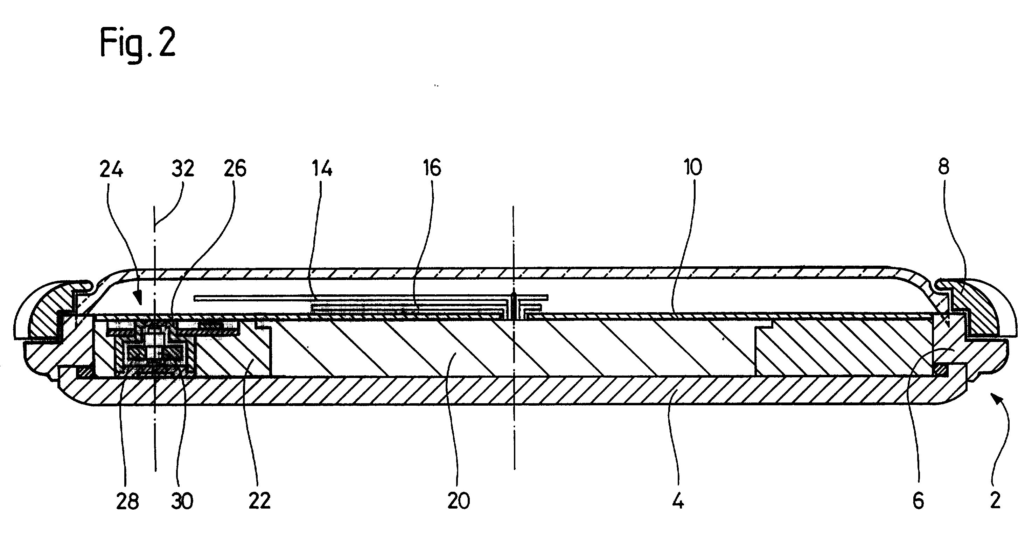

L'agencement intérieur de la montre selon le deuxième mode de réalisation est similaire à celui du premier mode de réalisation tel que décrit à l'aide de la figure 2. Dans la zone arrachée 92, on remarquera que l'agencement des capteurs magnétiques 34 et 36 est équivalent à celui du premier mode de réalisation, bien que décalé angulairement d'un angle de 45° pour permettre un agencement de la cage 26 comportant l'aimant permanent 28 le plus éloigné possible du centre 94 de la montre. On remarquera encore que le substrat 38, sur lequel sont positionnés les capteurs 34, 36, présente une forme différente de celle décrite dans le premier mode de réalisation et que ce substrat 38 comporte deux trous métallisés 96 et 97 permettant d'établir une connexion électrique avec les capteurs 34 et 36 sur la face du substrat 38 opposée à la face sur laquelle sont agencés les capteurs 34 et 36.

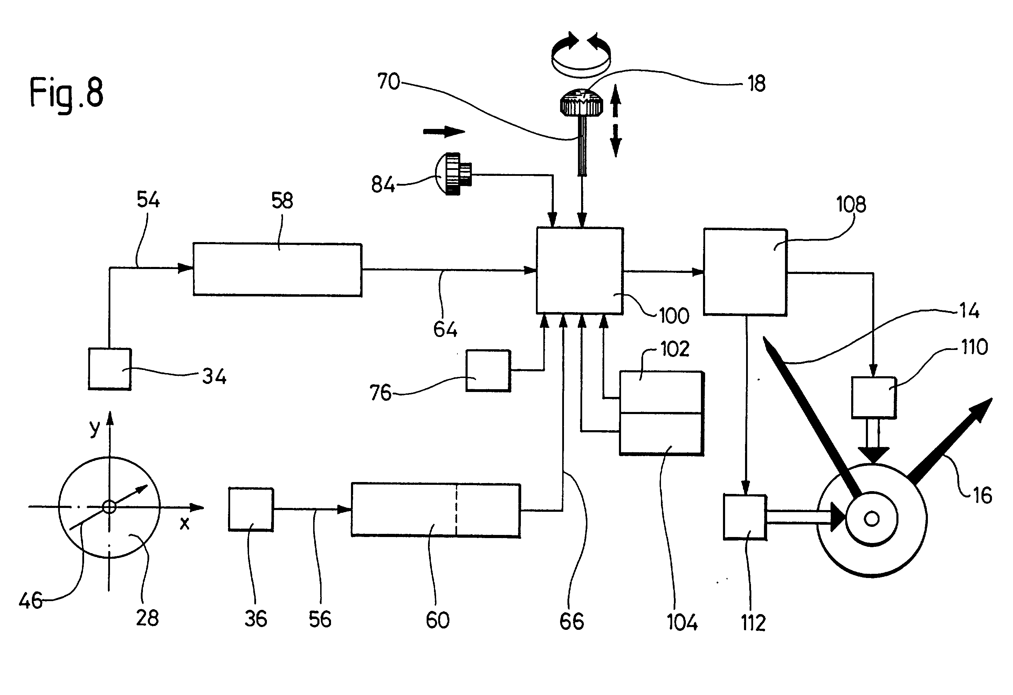

Sur la figure 8 est représenté schématiquement un agencement du deuxième mode de réalisation de l'invention.

De manière équivalente au premier mode de réalisation, les capteurs magnétiques 34 et 36 fournissent respectivement deux signaux de détection 54 et 56 qui sont traités respectivement par les unités de traitement 58 et 60. Les unités 58 et 60 fournissent respectivement deux signaux utiles de détection 64 et 66 à une unité électronique de gestion et de commande 100.

L'unité électronique 100 est reliée électriquement à la tige rotative 70 solidaire de la couronne 18 et au poussoir 84. La tige 70 et le poussoir 84 sont agencés dans le boîtier de la montre de manière à pouvoir fournir des signaux de commande à l'unité électronique 100 lorsque ceux-ci sont actionnés. Comme dans le premier mode de réalisation, la tige 70 fournit divers signaux de commande lorsqu'elle est tournée dans un sens de rotation et dans l'autre et également lorsqu'elle est pressée ou tirée axialement. Le poussoir 84 fournit des signaux de commande à l'unité électronique 100 lorsqu'il est pressé par un utilisateur de la montre.

Il est prévu également une première unité de stockage d'informations 76 comportant une première table de correspondance telle que décrite dans le premier mode de réalisation. L'agencement et la fonction de l'unité 76 ne seront pas à nouveau décrits ici en détail. De plus, il est prévu une deuxième unité de stockage d'informations 102 dans laquelle sont mémorisés les azimuts magnétiques d'un lieu géographique prédéfini relativement à une pluralité de lieux, de régions ou de pays donnés correspondant à la pluralité de repères 90 prévus sur le cadran 88 de la montre (figure 7). En outre, il est prévu une troisième unité de stockage d'informations 104 dans laquelle sont mémorisées les déclinaisons magnétiques de ladite pluralité de lieux, régions ou pays.

L'unité électronique 100 est agencée pour déterminer la direction angulaire du nord magnétique terrestre à l'aide des signaux de détection 64 et 66 et de la première table de correspondance mémorisée dans l'unité 76. Cette détermination est effectuée de manière analogue au premier mode de réalisation décrit ci-avant.

Comme cela sera décrit plus en détail ci-après, un utilisateur de la montre peut sélectionner une des villes inscrites sur le cadran 88 en alignant, dans un mode de sélection, l'aiguille des minutes 14 sur le repère 90 correspondant. Le résultat de cette sélection est fourni à l'unité électronique 100 qui, à l'aide de l'unité 104, détermine la déclinaison magnétique du lieu sélectionné par l'utilisateur et correspondant sensiblement à l'endroit où il est situé. De ce fait, l'unité électronique 100 est à même de déterminer la direction du nord géographique avec une bonne précision.

Ainsi, dans un mode de fonctionnement boussole, l'aiguille 16 peut indiquer correctement la direction du nord géographique à l'utilisateur de la montre. Pour ce faire, l'unité électronique 100 commande une alimentation 108, laquelle alimente de manière indépendante un premier moteur 110 bidirectionnel et un deuxième moteur 112 monodirectionnel ou bidirectionnel. Le moteur 110 est couplé mécaniquement à l'aiguille des heures 16 alors que le moteur 112 est couplé mécaniquement à l'aiguille des minutes 14. Comme cela a déjà été mentionné, les aiguilles 14 et 16 permettent, dans un mode standard d'indiquer l'heure locale. Dans un mode de sélection, l'aiguille 14 sert à sélectionner une ville parmi une pluralité de villes repérées sur le cadran 88. Dans un mode de fonctionnement boussole, l'aiguille 16 sert à indiquer la direction du nord géographique et, dans un mode d'indication de la direction d'un lieu prédéfini, notamment de la Mecque, cette aiguille 16 sert à indiquer cette direction.

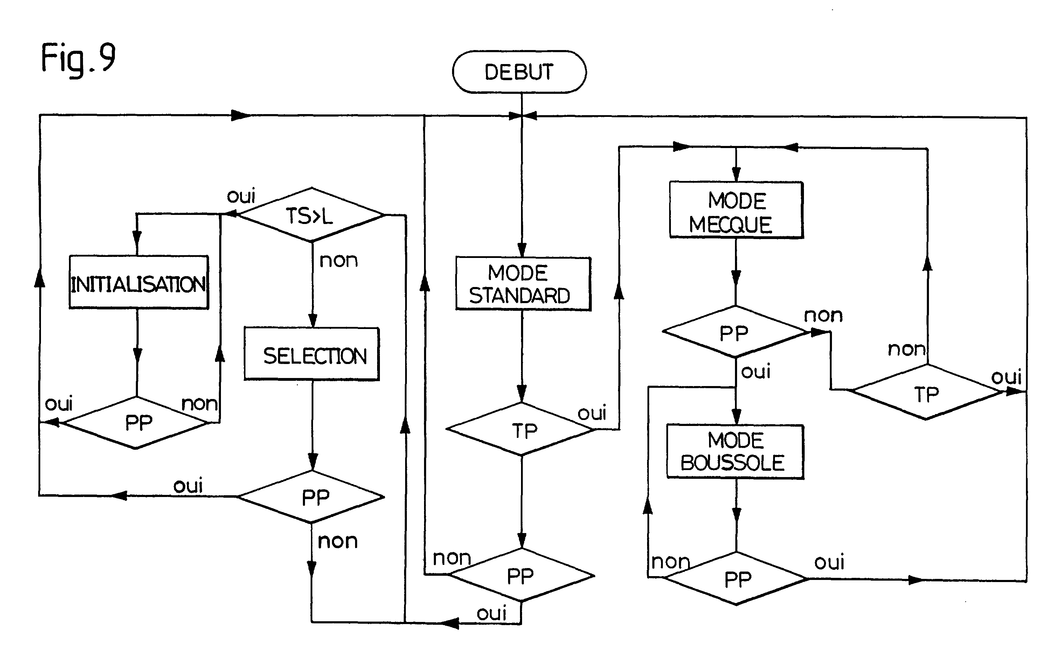

A l'aide de la figure 9, on décrira ci-après brièvement le principe de fonctionnement du deuxième mode de réalisation de l'invention.

La référence TP est utilisée pour désigner l'action de presser la tige 70, la référence PP pour désigner l'action de presser sur le poussoir 84. Dans un mode standard, la montre est agencée pour indiquer l'heure locale à l'aide des aiguilles 14 et 16. Lorsque la tige 70 est pressée, un mode d'indication de la direction de la Mecque, désigné par mode Mecque, est activé. Dans ce mode Mecque, l'aiguille 16 indique à l'utilisateur de la montre la direction de la Mecque, c'est-à-dire l'azimut géographique de la Mecque relativement au lieu sélectionné correspondant sensiblement à l'endroit où est situé l'utilisateur de la montre.

Par une pression sur le poussoir 84, un mode boussole est activé. Dans ce mode boussole, l'aiguille 16 indique la direction du nord géographique comme cela a déjà été décrit. Par une nouvelle pression sur le poussoir 84, le mode boussole est désactivé et le mode standard est à nouveau activé. Pour sortir du mode Mecque, il est prévu de presser à nouveau sur la tige 70.

Il est encore prévu un mode de sélection et un mode d'initialisation activables à l'aide du poussoir 84. Par une pression sur ce poussoir 84 pendant un laps de temps TS plus grand qu'une valeur limite L, le mode d'initialisation est activé. Ce mode d'initialisation permet de repérer la position angulaire des deux aiguilles 14 et 16. Pour ce faire, l'utilisateur amène par exemple ces deux aiguilles 14 et 16 sur la position 12 heures par une manipulation appropriée. Pour sortir du mode d'initialisation, il est prévu de presser à nouveau sur le poussoir 84.

Pour entrer dans le mode de sélection, il est nécessaire de presser sur le poussoir 84 durant un laps de temps TS inférieur à la valeur limite L. Dans ce mode de sélection, une ville peut être sélectionnée parmi la pluralité de villes inscrites sur le cadran 88 et repérées au moyen des repères 90. La sélection s'opère par un alignement de l'aiguille 16 sur le repère 90 correspondant à la ville dans laquelle l'utilisateur est situé ou à la ville la plus proche appartenant à la pluralité de villes indiquées. Pour sortir du mode sélection, une nouvelle pression sur le poussoir 84 est nécessaire.

Dans le mode d'indication de la direction de la Mecque, l'unité électronique 100 détermine, à l'aide de l'unité 102 dans laquelle sont mémorisés les azimuts magnétiques de la pluralité de villes repérées sur le cadran 88, la direction angulaire correspondant à la direction de la Mecque et commande le moteur bidirectionnel 110 par l'intermédiaire de l'alimentation 108 pour que l'aiguille 16 indique la direction correcte de la Mecque.

On remarquera que, dans ce deuxième mode de réalisation de l'invention, la montre possède seulement des moyens d'indication et de sélection analogiques.

Finalement, on notera que, soit l'indication de la direction de la Mecque, soit l'indication de la direction du nord géographique est opérée en temps réel de telle sorte que l'aiguille 16, servant d'indicateur de direction, continue de pointer dans la direction prédéterminée lorsque la montre subit une rotation dans le plan du cadran 88. La direction angulaire de l'axe magnétique 46 de l'aimant 28 est suivi en continu dans un repère X-Y (figures 5 et 8) fixe relativement au boîtier de la montre. L'algorithme de calcul de la direction du nord magnétique correspondant à la position angulaire de l'axe magnétique 46 est exécuté avec une fréquence de répétition déterminée pouvant être élevée.

## Revendications

1. Montre comprenant :
- un mouvement d'horlogerie (20),
- un boîtier (4, 6, 8; 80) dans lequel est logé ledit mouvement d'horlogerie,
- des moyens de détection (28, 34, 36) sensibles au champ magnétique terrestre et fournissant un premier signal de détection (54) et un deuxième signal de détection (56),
- des moyens d'indication (16) d'une direction géographique,
- des moyens électroniques (68; 100) pour commander lesdits moyens d'indication en fonction desdits premier et deuxième signaux de détection,
cette montre étant caractérisée en ce que lesdits moyens de détection comportent un aimant bipolaire permanent (28) solidaire en rotation d'un arbre (30) agencé dans ledit boîtier de manière à tourner librement autour d'un axe de rotation (32) prédéterminé, cet aimant ayant un axe magnétique (46) sensiblement perpendiculaire audit axe de rotation, et au moins un premier capteur (34) et un deuxième capteur (36) agencés dans ledit boîtier et sensibles au champ magnétique dudit aimant (28), ces premier et deuxième capteurs fournissant respectivement lesdits premier et deuxième signaux de détection, lesdits signaux étant traités par lesdits moyens électroniques de manière à déterminer la position angulaire dudit axe magnétique dudit aimant bipolaire.

2. Montre selon la revendication 1, caractérisée en ce que ledit aimant (28) est situé dans une région périphérique (24) extérieure audit mouvement horloger (20).

3. Montre selon la revendication 1 ou 2 dans laquelle ledit mouvement horloger (20) comprend des masses magnétiques, caractérisée en ce que ledit aimant (28) est agencé dans ledit boîtier de cette montre à une distance suffisante desdites masses magnétiques pour que sa position d'énergie minimale soit essentiellement déterminée par le flux magnétique terrestre.

4. Montre selon l'une des revendications précédentes, caractérisée en ce que lesdits premier et deuxième capteurs (34, 36) sont formés par deux sondes de Hall disposées sur un même substrat (38) positionné fixement relativement à une cage (26) dans laquelle est logée ledit aimant (28), cette cage ayant deux paliers dans lesquels sont respectivement montés libre les deux extrémités dudit arbre (30).

5. Montre selon la revendication 4, caractérisée en ce que ladite cage (26) présente une portée externe sur laquelle est disposée en porte-à-faux ledit substrat (38), lesdits premier et deuxième capteurs (34, 36) étant situés dans un plan perpendiculaire audit axe de rotation (32) dudit aimant (28), ces premier et deuxième capteurs étant situés à une même distance dudit axe de rotation (32) et ayant un décalage angulaire de 90° relativement à cet axe de rotation.

6. Montre selon la revendication 3, caractérisée en ce qu'elle comprend en outre une première unité (76) de stockage d'informations dans laquelle est mémorisée une table de correspondance définissant pour une première pluralité de positions angulaires dudit axe magnétique (46) dudit aimant (28) une seconde pluralité de positions angulaires respectives, chaque position angulaire de la seconde pluralité déterminant la direction du nord magnétique terrestre lorsque l'axe magnétique (46) dudit aimant (28) est orienté selon la position angulaire respective de la première pluralité de positions angulaires, le décalage angulaire entre la position dudit axe magnétique et la direction correspondante du nord magnétique terrestre ayant une valeur dont la grandeur est fonction de la perturbation engendrée par lesdites masses magnétiques de ladite montre sur le flux magnétique terrestre, dans la région où est agencé ledit aimant permanent, et sur ledit aimant lui-même.

7. Montre selon la revendication 6, caractérisée en ce que les valeurs des positions angulaires de ladite seconde pluralité sont déterminées expérimentalement à l'aide d'une boussole étalon non perturbée et de moyens de détection de la position angulaire dudit axe magnétique (46) dudit aimant (28) agencé dans le boîtier de ladite montre.

8. Montre selon l'une quelconque des revendications précédentes, comprenant en outre des premiers moyens de sélection (12, 18, 70) agencés pour fournir un premier signal de commande auxdits moyens électroniques (68), ces derniers répondant à ce premier signal de commande pour déterminer un azimut magnétique sélectionné par un utilisateur de ladite montre et définissant ladite direction géographique indiquée par lesdits moyens d'indication (16) lorsque ceux-ci sont activés dans un mode boussole.

9. Montre selon l'une quelconque des revendications 1 a 7, caractérisée en ce qu'elle comprend des premiers moyens de sélection (12, 18, 70) agencés pour fournir un premier signal de commande et un deuxième signal de commande auxdits moyens électroniques (68), ces derniers répondant au premier signal de commande pour déterminer un azimut géographique sélectionné par un utilisateur de ladite montre et audit deuxième signal de commande pour déterminer une déclinaison magnétique également sélectionnée par un utilisateur de ladite montre, lesdits moyens électroniques (68) étant agencés pour déterminer un azimut magnétique correspondant et commander lesdits moyens d'indication (16) d'une direction géographique de manière à ce que cette direction géographique indiquée correspond audit azimut géographique lorsqu'un mode boussole est activé.

10. Montre selon la revendication 9, caractérisée en ce que lesdits premiers moyens de sélection comprennent une tige rotative (70) actionnable par un utilisateur de la montre au moyen d'une couronne (18) reliée fixement à cette tige et en ce qu'elle comprend en outre des moyens d'affichage (12) permettant, audit utilisateur de la montre, de sélectionner ledit azimut géographique par une rotation de ladite couronne dans un premier sens et ladite déclinaison magnétique par une rotation de cette couronne dans un second sens.

11. Montre selon l'une des revendications précédentes, caractérisée en ce qu'elle comprend en outre des deuxièmes moyens de sélection (14, 18, 70, 88, 90) pour sélectionner un lieu ou une région géographique parmi une pluralité de lieux ou de régions géographiques donnés.

12. Montre selon la revendication 11, caractérisée en ce que lesdits deuxièmes moyens de sélection comprennent une aiguille (14), actionnable par l'utilisateur de la montre au moyen d'une couronne (18), et un cadran (88) comprenant à sa surface une pluralité de repères (90) correspondant respectivement à ladite pluralité de lieux ou de régions géographiques donnés, ladite aiguille étant susceptible d'être alignée sur chacun de ladite pluralité de repères pour permettre la sélection du lieu ou de la région géographique correspondante.

13. Montre selon la revendication 11 ou 12, caractérisée en ce qu'elle comprend en outre une deuxième unité (102) de stockage d'informations dans laquelle sont stockés les azimuts magnétiques d'un lieu géographique prédéfini relativement à ladite pluralité de lieux ou régions géographiques donnés, lesdits moyens électroniques (100) étant agencés pour commander lesdits moyens d'indication (16) d'une direction géographique de manière que cette direction correspond audit lieu géographique prédéfini lorsqu'un mode d'indication de ce lieu prédéfini est activé et que l'utilisateur de la montre est situé sensiblement dans ledit lieu ou ladite région géographique sélectionnée.

14. Montre selon l'une des revendications 11 à 13, caractérisée en ce qu'elle comprend une troisième unité (104) de stockage d'informations dans laquelle sont stockées les déclinaisons magnétiques de ladite pluralité de lieux ou régions géographiques, lesdits moyens électroniques (100) étant agencés pour commander lesdits moyens d'indication (16) d'une direction géographique de manière à ce que cette direction correspond à un azimut géographique, sélectionné par un utilisateur de ladite montre, ou au nord géographique lorsqu'un mode boussole est activé et que l'utilisateur de cette montre est situé sensiblement dans le lieu ou la région géographique sélectionnée.

15. Montre selon l'une des revendications précédentes, caractérisée en ce qu'elle comprend un dispositif d'indication de l'heure comportant au moins une aiguille (16) entraînée par un moteur bidirectionnel (76; 110) et des moyens d'initialisation de cette aiguille (16) pour fournir auxdits moyens électroniques (68; 100) une position angulaire initiale de l'aiguille, ces moyens électroniques étant agencés pour suivre en temps réel la position angulaire de ladite aiguille lorsque la montre est maintenue en fonctionnement, ladite aiguille appartenant audit moyen d'indication d'une direction géographique et servant à indiquer visuellement cette direction à un utilisateur de ladite montre.

## Patentansprüche

1. Uhr, mit:
- einem Uhrwerk (20),
- einem Gehäuse (4, 6, 8; 80), in dem sich das Uhrwerk befindet
- Erfassungsmitteln (28, 34, 36), die auf das terrestrische Magnetfeld ansprechen und ein erstes Erfassungssignal (54) sowie ein zweites Erfassungssignal (56) liefern,
- Mitteln (16) zum Angeben einer geographischen Richtung,
- elektronischen Mitteln (68; 100) zum Steuern der Angabemittel in Abhängigkeit von dem ersten und dem zweiten Erfassungssignal,
wobei diese Uhr dadurch gekennzeichnet ist, daß die Erfassungsmittel einen bipolaren Permanentmagneten (28), der mit einer im Gehäuse angeordneten Welle (30) drehfest verbunden ist, um sich um eine vorgegebene Drehachse (32) frei zu drehen, wobei der Magnet eine zur Drehachse im wesentlichen senkrechte magnetische Achse (46) besitzt, und wenigstens einen ersten Sensor (34) und einen zweiten Sensor (36), die in dem Gehäuse angeordnet sind und auf das Magnetfeld des Magneten (28) ansprechen, wobei dieser erste und dieser zweite Sensor das erste bzw. das zweite Erfassungssignal liefern, wobei die Signale von den elektronischen Mitteln in der Weise verarbeitet werden, daß die Winkelstellung der magnetischen Achse des Bipolarmagneten bestimmt wird, umfasssen.

2. Uhr nach Anspruch 1, dadurch gekennzeichnet, daß sich der Magnet (28) in einem äußeren Umfangsbereich (24) des Uhrwerks (20) befindet.

3. Uhr nach Anspruch 1 oder 2, in der das Uhrwerk (20) magnetische Massen enthält, dadurch gekennzeichnet, daß der Magnet (28) im Gehäuse dieser Uhr in einem ausreichenden Abstand von den magnetischen Massen angeordnet ist, damit seine Position mit minimaler Energie im wesentlichen durch den terrestrischen magnetischen Fluß bestimmt ist.

4. Uhr nach einem der vorangehenden Ansprüche, dadurch gekennzeichnet, daß der erste und der zweite Sensor (34, 36) durch zwei Hall-Sonden gebildet sind, die auf demselben Substrat (38) angeordnet sind, das relativ zu einem Käfig (26), in dem der Magnet (28) untergebracht ist, fest angeordnet ist, wobei dieser Käfig zwei Lager besitzt, in denen die beiden Enden der Welle (30) frei angebracht sind.

5. Uhr nach Anspruch 4, dadurch gekennzeichnet, daß der Käfig (26) einen äußeren Bereich aufweist, an dem das Substrat (38) einseitig eingespannt angeordnet ist, wobei der erste und der zweite Sensor (34, 36) sich in einer zur Drehachse (32) des Magneten (28) senkrechten Ebene befinden, wobei sich dieser erste und dieser zweite Sensor im gleichen Abstand von der Drehachse (32) befinden und eine Winkelverschiebung von 90° in bezug auf diese Drehachse aufweisen.

6. Uhr nach Anspruch 3, dadurch gekennzeichnet, daß sie außerdem eine erste Informationsspeichereinheit (76) umfaßt, in der eine Korrespondenztabelle gespeichert ist, die für eine erste Mehrzahl von Winkelpositionen der magnetischen Achse (46) des Magneten (28) eine zweite Mehrzahl von entsprechenden Winkelpositionen definiert, wovon jede Winkelposition der zweiten Mehrzahl die terrestrische magnetische Nordrichtung bestimmt, wenn die magnetische Achse (46) des Magneten (28) in der jeweiligen Winkelposition der ersten Mehrzahl von Winkelpositionen orientiert ist, wobei die Winkelverschiebung zwischen der Position der magnetischen Achse und der entsprechenden terrestrischen magnetischen Nordrichtung einen Wert besitzt, dessen Größe von der durch die magnetischen Massen der Uhr erzeugten Störung auf den terrestrischen magnetischen Fluß in dem Bereich, in dem der Permanentmagnet angeordnet ist, und auf den Magneten selbst abhängt.

7. Uhr nach Anspruch 6, dadurch gekennzeichnet, daß die Werte der Winkelpositionen der zweiten Mehrzahl experimentell mit Hilfe eines ungestörten Eichkompasses und mit Hilfe von Mitteln zur Erfassung der Winkelposition der magnetischen Achse (46) des im Gehäuse der Uhr angeordneten Magneten (28) bestimmt werden.

8. Uhr nach irgendeinem der vorangehenden Ansprüche, außerdem umfassend erste Wählmittel (12, 18, 70), die so beschaffen sind, daß sie ein erstes Steuersignal an die elektronischen Mittel (68) liefern, wobei diese letzteren auf dieses erste Steuersignal antworten, um einen von einem Benutzer der Uhr gewählten magnetischen Azimut zu bestimmen, und die von den Angabemitteln (16) angegebene geographische Richtung definieren, wenn diese in einem Kompaßbetrieb aktiviert sind.

9. Uhr nach irgendeinem der Ansprüche 1 bis 7, dadurch gekennzeichnet, daß sie erste Wählmittel (12, 18, 70) umfaßt, die so beschaffen sind, daß sie ein erstes Steuersignal und ein zweites Steuersignal an die elektronischen Mittel (68) liefern, wobei diese letzteren auf das erste Steuersignal antworten, um einen von einem Benutzer der Uhr gewählten geographischen Azimut zu bestimmen, und auf das zweite Steuersignal antworten, um eine ebenfalls von einem Benutzer der Uhr gewählten magnetische Deklination zu bestimmen, wobei die elektronischen Mittel (68) so beschaffen sind, daß sie einen entsprechenden magnetischen Azimut bestimmen und die Mittel (16) zur Angabe einer geographischen Richtung in der Weise steuern, daß diese angegebene geographische Richtung dem geographischen Azimut entspricht, wenn ein Kompaßmodus aktiviert ist.

10. Uhr nach Anspruch 9, dadurch gekennzeichnet, daß die ersten Wählmittel einen Drehstift (70) umfassen, der durch einen Benutzer der Uhr mittels eines mit diesem Stift fest verbundenen Kranzes (18) betätigbar ist, und daß sie außerdem Anzeigemittel (12) enthält, die dem Benutzer der Uhr ermöglichen, den geographischen Azimut durch eine Drehung des Kranzes in einer ersten Richtung und die magnetische Deklination durch eine Drehung dieses Kranzes in einer zweiten Richtung zu wählen.

11. Uhr nach einem der vorangehenden Ansprüche, dadurch gekennzeichnet, daß sie außerdem zweite Wählmittel (14, 18, 70, 88, 90) umfaßt, um einen Ort oder eine geographische Region aus mehreren gegebenen Orten oder geographischen Regionen zu wählen.

12. Uhr nach Anspruch 11, dadurch gekennzeichnet, daß die zweiten Wählmittel einen Zeiger (14), der durch den Benutzer der Uhr mittels eines Kranzes (18) betätigbar ist, sowie ein Zifferblatt (88) umfassen, das auf seiner Oberfläche mehrere Markierungen (90) aufweist, die den mehreren gegebenen Orten oder geographischen Regionen entsprechen, wobei der Zeiger auf jede der mehreren Markierungen ausgerichtet werden kann, um die Wahl des entsprechenden Ortes oder der geographischen Region zu ermöglichen.

13. Uhr nach Anspruch 11 oder 12, dadurch gekennzeichnet, daß sie außerdem eine zweite Informationsspeichereinheit (102) umfaßt, in der die magnetischen Azimutwinkel eines im voraus definierten geographischen Ortes relativ zu den mehreren gegebenen Orten oder geographischen Regionen gespeichert sind, wobei die elektronischen Mittel (100) so beschaffen sind, daß sie die Mittel (16) zur Angabe einer geographischen Richtung in der Weise steuern, daß diese Richtung dem im voraus definierten geographischen Ort entspricht, wenn ein Modus zur Angabe dieses im voraus definierten Ortes aktiviert ist und der Benutzer der Uhr sich im wesentlichen an dem gewählten Ort oder in der gewählten geographischen Region befindet.

14. Uhr nach einem der Ansprüche 11 bis 13, dadurch gekennzeichnet, daß sie außerdem eine dritte Einheit (104) zum Speichern von Informationen umfaßt, in der die magnetischen Deklinationen der mehreren Orte oder geographischen Bereiche gespeichert sind, wobei die elektronischen Mittel (100) so beschaffen sind, daß sie die Mittel (16) zur Angabe einer geographischen Richtung in der Weise steuern, daß diese Richtung einem geographischen Azimut, der von einem Benutzer der Uhr gewählt wird, oder der geographischen Nordrichtung entspricht, wenn ein Kompaßmodus aktiviert ist und wenn sich der Benutzer dieser Uhr im wesentlichen an dem gewählten Ort oder in der gewählten geographischen Region befindet.

15. Uhr nach einem der vorangehenden Ansprüche, dadurch gekennzeichnet, daß sie eine Uhrzeitangabevorrichtung enthält, die wenigstens einen von einem bidirektionalen Motor (76; 110) angetriebenen Zeiger (16) sowie Mittel zum Initialisieren dieses Zeigers (16), um an die elektronischen Mittel (68; 100) eine anfängliche Winkelposition des Zeigers zu liefern, umfaßt, wobei diese elektronischen Mittel so beschaffen sind, daß sie in Echtzeit der Winkelposition des Zeigers folgen, wenn die Uhr in Betrieb gehalten wird, wobei der Zeiger zu den Mitteln zur Angabe einer geographischen Richtung gehört und dazu dient, diese Richtung einem Benutzer der Uhr visuell anzugeben.

## Claims

1. Watch comprising:
- an horological movement (20),
- a case (4, 6, 8; 80) in which said horological movement is housed,
- detecting means (28, 34, 36) sensitive to the terrestrial magnetic field and furnishing a first detection signal (54) and a second detection signal (56),
- means (16) for indicating a geographic direction,
- electronic means (68; 100) for controlling said indicating means as a function of said first and second detection signals,
such watch being characterized in that said detecting means include a bipolar permanent magnet (28), mounted on the shaft (30) so as to rotate therewith, said shaft being arranged in said case so as to rotate freely around a predetermined rotation axis (32), such magnet having a magnetic axis (46) substantially perpendicular to said rotation axis, and at least a first sensor (34) and a second sensor (36) arranged within said case and sensitive to the magnetic field of said magnet (28), such first and second sensors respectively furnishing said first and second detection signals, said signals being processed by said electronic means in a manner to determine the angular position of said magnetic axis of said bipolar magnet.

2. Watch according to claim 1, characterized in that said magnet (28) is located in a peripheral region (24) exterior to said horological movement (20).

3. Watch according to claim 1 or 2 in which said horological movement (20) comprises magnetic masses, characterized in that said magnet (28) is arranged within said case of such watch at a sufficient distance from said magnetic masses in order that its minimum energy position is basically determined by the terrestrial magnetic flux.

4. Watch according to any of the preceding claims, characterized in that said first and second sensors (34, 36) are formed by two Hall probes arranged on a common substrate (38) fixedly positioned relative to a cage (26) in which said magnet (28) is housed, such cage having two bearings in which the two ends of said shaft (30) are respectively freely mounted.

5. Watch according to claim 4, characterized in that said cage (26) exhibits an external bearing surface on which said substrate (38) is arranged in cantilever, said first and second sensors (34, 36) being located in a plane perpendicular to said rotation axis (32) of said magnet (28), such first and second sensors being located at the same distance from said axis of rotation (32) and having an angular separation of 90° relative to such axis of rotation.

6. Watch according to claim 3, characterized in that it further comprises a first information storing unit (76) in which a correspondence table is memorized, defining for a first plurality of angular positions, a second plurality of respective angular positions of said magnetic axis (46) of said magnet (28), each angular position of the second plurality determining the direction of the terrestrial magnetic north whenever the magnetic axis (46) of said magnet (28) is oriented according to the respective angular position of the first plurality of angular positions, the angular spread between the position of said magnetic axis and the corresponding direction of the terrestrial magnetic north having a value the magnitude of which is a function of the perturbation generated by said magnetic masses of said watch on the terrestrial magnetic flux in the region in which said permanent magnet is arranged and on said magnet itself.

7. Watch according to claim 6, characterized in that the values of the angular positions of said second plurality are experimentally determined with the help of an unperturbed master compass and means for detection of the angular position of said magnetic axis (46) of said magnet (28) arranged within the case of said watch.

8. Watch according to any one of the preceding claims, further comprising first selection means (12, 18, 70) arranged to furnish a first control signal to said electronic means (68), these latter responding to such first control signal in order to determine a magnetic azimuth selected by a user of said watch and defining said geographic direction indicated by said indicating means (16) when the latter are activated in a compass mode.

9. Watch according to any one of claims 1 to 7, characterized in that it comprises first selection means (12, 18, 70) arranged to furnish a first control signal and a second control signal to said electronic means (68), such latter responding to the first control signal in order to determine a geographic azimuth selected by a user of said watch and to said second control signal in order to determine a magnetic declination also selected by a user of said watch, said electronic means (68) being arranged in order to determine a corresponding magnetic azimuth and to drive said indicating means (16) to a geographic direction in a manner such that such indicated geographic direction corresponds to said geographic azimuth whenever a compass mode is activated.

10. Watch according to claim 9, characterized in that said first selection means comprise a rotatable stem (70) operable by a user of the watch by means of a crown (18) fixedly coupled to said stem and in that it further comprises display means (12) enabling said watch user to select said geographic azimuth by a rotation of said crown in a first sense and said magnetic declination by a rotation of said crown in a second sense.

11. Watch according to any of the preceding claims, characterized in that it further comprises two second selection means (14, 18, 70, 88, 90) in order to select a locality or a geographic region from amongst a plurality of given localities or geographic regions.

12. Watch according to claim 11, characterized in that said second selection means comprise a hand (14) operable by the user of the watch by means of a crown (18), and a dial (88) comprising a plurality of indications (90) on its surface corresponding respectively to said plurality of localities or given geographic regions, said hand being adapted to be aligned on each of said plurality of indications in order to enable the selection of the corresponding locality or geographic region.

13. Watch according to claim 11 or 12, characterized in that it further comprises a second information storing unit (102) in which the magnetic azimuths of a geographic locality, predefined relative to said plurality of given localities or geographic regions, are stored, said electronic means (100) being arranged to drive said indicating means (16) to a geographic direction in a manner such that such direction corresponds to said predefined geographic locality whenever an indication mode of such predefined locality is activated and that the watch user is located substantially within said locality or said selected geographic region.

14. Watch according to any of claims 11 to 13, characterized in that it comprises a third information storage unit (104) in which the magnetic declinations of said plurality of localities or geographic regions are stored, said electronic means (100) being arranged to drive said indicating means (16) to a geographic direction in a manner such that such direction corresponds to a geographic azimuth selected by a user of said watch, or to the gecgraphic north whenever a compass mode is activated and the user of such watch is located substantially within the locality or selected geographic region.

15. Watch according to any of the preceding claims, characterized in that it comprises a time indicating mechanism including at least one hand (16) driven by a bidirectional motor (76; 110) and means for initializing such hand (16) in order to furnish an initial angular position of the hand to said electronic means (68; 100), such electronic means being arranged to follow the angular position of said hand in real time when the watch is maintained in operation, said hand belonging to said means for indicating a geographic direction and serving to indicate visually such direction to a user of said watch.
